# FASCICULE DE BREVET EUROPEEN

(11) **EP 3 325 793 B1**
(45) Date de publication et mention de la délivrance du brevet: **20.03.2019**
(21) Numéro de dépôt: 16756724.7
(22) Date de dépôt: 21.07.2016
(51) Int. Cl.: F02K 3/065, F01D 21/06, F02K 3/072

(54) **AÉRONEF COMPORTANT UNE TURBOMACHINE INTÉGRÉE AU FUSELAGE ARRIÈRE COMPORTANT UN SYSTÈME DE BLOCAGE DES SOUFFLANTES**
FLUGZEUG MIT EINEM TURBINENMOTOR IM HECKRUMPF MIT EINEM SYSTEM ZUM BLOCKIEREN DER LÜFTER
AIRCRAFT COMPRISING A TURBINE ENGINE INCORPORATED INTO THE REAR FUSELAGE COMPRISING A SYSTEM FOR BLOCKING THE FANS

(30) Priorité: 22.07.2015 FR 1556947
(43) Date de publication de la demande: 30.05.2018
(73) Titulaire: Safran Aircraft Engines, 75015 Paris (FR)
(72) Inventeur: GALLET, François, 77550 Moissy-Cramayel Cedex (FR)
(74) Mandataire: Gevers & Orès
(86) Numéro de dépôt international: PCT/FR2016/051887
(87) Numéro de publication internationale: WO 2017/013365

(56) Documents cités:
- DE-A1- 2 119 288
- DE-A1- 3 834 511
- FR-A1- 2 997 681

## Description

### Domaine de l'invention et état de la technique :

La présente invention se rapporte au domaine des aéronefs tels que des avions, notamment civils, propulsés par une turbomachine à soufflantes contrarotatives, intégrée dans le prolongement du fuselage en aval de celui-ci. Elle concerne plus particulièrement les moyens pour adapter les soufflantes de la turbomachine dans ce type d'architecture à des situations particulières de fonctionnement qui doivent être prises en compte pour des questions de sécurité.

Il a été proposé dans la demande de brevet FR-A1-2 997 681, une nouvelle architecture d'aéronef permettant de réduire les nuisances sonores et la consommation de carburant de l'aéronef en limitant la traînée aérodynamique par absorption de la couche limite.

Dans une telle architecture, un aéronef est propulsé par une turbomachine à soufflantes contrarotatives carénées, la turbomachine étant intégrée à l'arrière du fuselage de l'aéronef. Généralement, la turbomachine comprend deux générateurs de gaz qui alimentent une turbine de puissance ayant deux rotors contrarotatifs pour entraîner deux soufflantes disposées en aval des générateurs de gaz. Les générateurs de gaz ont des entrées d'air latérales distinctes pour alimenter chacun d'eux. En aval des générateurs de gaz, les soufflantes sont disposées dans le prolongement du fuselage de l'aéronef et généralement alimentées par une couronne annulaire reliée à ce dernier, de manière à absorber une partie au moins de la couche limite formée autour du fuselage. Le diamètre des soufflantes est de l'ordre de celui du fuselage dans sa plus grande section. La vitesse de rotation des soufflantes est généralement plus basse que pour des turbomachines classiques, notamment pour que la vitesse en tête d'aube soit subsonique.

Il a été proposé, dans le document DE 2 119 288, un dispositif de propulsion de soufflante comportant deux hélices contrarotatives chacune mise en rotation par un moteur. Les deux moteurs sont coaxiaux et si l'un des deux moteurs tombe en panne, la soufflante s'arrête et l'autre soufflante continue de fonctionner. Le document DE 38 34 511 A1 divulgue encore un autre aéronef à turbomachine à soufflantes coaxiales et contrarotatives.

Il faut cependant prendre en compte l'éventualité que l'une des soufflantes connaisse une défaillance, par exemple un balourd, voire une perte d'aube. Dans ce cas il faut, même si le moteur ne présente pas de défaillance, arrêter ce rotor de soufflante pour permettre à l'aéronef de regagner un aéroport.

La présente invention a pour objet de proposer une façon d'arrêter ce rotor de manière à avoir les meilleures conditions possibles de fonctionnement dans ce mode dégradé pour regagner un aéroport.

Un objectif secondaire de l'invention est de déterminer quand il faut arrêter le rotor défaillant.

### Exposé de l'invention :

A cet effet, l'invention concerne un aéronef comportant un fuselage et propulsé par une turbomachine à deux soufflantes coaxiales et contrarotatives, la turbomachine comportant une turbine de puissance ayant deux rotors contrarotatifs entraînant, l'un une soufflante en amont de la turbine, l'autre une soufflante en aval de la turbine, chaque soufflante comportant une couronne d'aubes, et l'ensemble des soufflantes et de la turbine étant intégré à l'arrière du fuselage, dans le prolongement de celui-ci, l'aéronef comportant pour au moins l'une des soufflantes, un dispositif de blocage de la rotation de la soufflante, des moyens configurés pour modifier le calage des aubes de cette soufflante de manière à la faire fonctionner en tant que redresseur par rapport à l'autre soufflante et un dispositif de blocage comportant des moyens de freinage permettant de solidariser le rotor de la turbine de puissance entraînant la soufflante correspondante avec un carter fixe de la turbomachine.

Selon une caractéristique de l'invention, les moyens de freinage sont par exemple des freins à disque.

Le calage des aubes d'une soufflante correspond à une orientation angulaire de celle-ci autour d'un rayon partant de l'axe de rotation et les traversant. Lorsque la soufflante est en fonctionnement nominal, le calage des aubes est défini de manière à ce que celles-ci communiquent une vitesse axiale à l'écoulement incident. Ce faisant, elles lui communiquent également un mouvement de rotation. Lorsque le calage des aubes correspond, par exemple, à une orientation des aubes proches de celle de l'axe de la soufflante et que celle-ci est arrêtée, les aubes ne peuvent plus accélérer l'écoulement mais elles peuvent par contre le redresser, c'est-à-dire diminuer son mouvement de rotation. Dans la pratique, les angles de calage correspondant à ces différents modes de fonctionnement dépendent des caractéristiques de l'écoulement incident.

L'invention atteint son objectif au moins pour la soufflante correspondant au rotor équipé des moyens de blocage lorsque cette soufflante est défaillante. Il est à noter que la turbine reste capable de fournir un certain niveau de puissance, le rotor arrêté jouant un rôle similaire à celui du stator dans une turbine de turbomachine classique. Par contre, le calage en mode redresseur des aubes de la soufflante arrêtée permettent d'optimiser la poussée fournie par les soufflantes dans cette configuration.

Les moyens de freinage permettent d'arrêter efficacement et de façon progressive la soufflante endommagée.

Par ailleurs, les moyens de freinage sont ainsi agencés en fonction de l'agencement du propulseur avec sa turbine de puissance permettant l'entrainement d'une des deux soufflantes contrarotatives lesquelles sont solidaires des rotors de turbines.

Selon une caractéristique de l'invention, les deux rotors comprennent un premier rotor et un deuxième rotor, les moyens de freinage comportant des premiers moyens de freinage qui sont associés au premier rotor de la turbine de puissance et des seconds moyens de freinage qui sont associés au deuxième rotor de la turbine de puissance.

Suivant une autre caractéristique de l'invention, les deux rotors comprennent un premier rotor et un deuxième rotor, les aubes du premier rotor s'étendent radialement vers l'intérieur par rapport à un axe longitudinal de la turbomachine et les aubes du deuxième rotor s'étendent radialement vers l'extérieur par rapport audit axe longitudinal. Avantageusement, des moyens de freinage pour la soufflante aval sont installés dans un corps central, situé en aval de la turbine de puissance et entouré par l'écoulement primaire traversant la turbine.

Avantageusement, la turbomachine comporte lesdits moyens de modification de calage des aubes comportent un mécanisme entraînant la rotation d'une tige de calage de chaque aube de la soufflante aval configuré, en outre, pour adapter l'opérabilité de cette soufflante.

De préférence, également, des moyens de freinage pour la soufflante amont sont installés en amont de la turbine de puissance.

Dans ce cas, le support des aubes de la soufflante amont comporte avantageusement un dispositif configuré pour permettre la rotation des aubes de la soufflante amont autour d'un axe radial par rapport à la rotation de la soufflante, et exercer un rappel élastique de l'orientation de ces aubes d'un calage correspondant à un fonctionnement de soufflante à un calage correspondant à un fonctionnement de redresseur.

Un tel aéronef peut comporter en outre des moyens de détection du balourd sur l'un des rotors de soufflante par au moins un accéléromètre orienté radialement par rapport à la rotation des soufflantes. La présence de moyens de détection d'un balourd permet de mesurer en particulier les vibrations dues à un balourd des soufflantes et de prendre une décision éclairée quant à la meilleure solution à appliquer pour optimiser le vol.

De préférence, il comporte au moins deux accéléromètres décalés angulairement par rapport à la rotation des soufflantes. Encore plus préférentiellement, ces deux accéléromètres sont décalés d'un angle sensiblement égal à 90 degrés. Cela permet de détecter le sens de rotation du balourd, donc d'identifier la soufflante défectueuse.

Enfin, l'invention concerne en particulier un aéronef dans lequel au moins deux générateurs de gaz alimentent la turbine de puissance, lesdits générateurs étant alimentés eux-mêmes par des entrées d'air distinctes disposées en périphérie du fuselage de l'aéronef.

### Brève description des figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1 présente une vue schématique en coupe longitudinale de la partie arrière d'un aéronef équipé d'une turbomachine selon l'invention ;
- la figure 2 présente une vue schématique d'une demi-coupe longitudinale de la turbomachine au niveau de la turbine de puissance et des soufflantes ;
- la figure 3 présente une vue schématique en coupe longitudinale d'un mode de réalisation d'un frein de rotor près de l'axe de symétrie, derrière la turbine de puissance ;
- la figure 4 présente une vue schématique en coupe longitudinale d'un mode de réalisation d'un dispositif de calage variable des aubes d'une soufflante près de l'axe de symétrie, derrière la turbine de puissance.

### Description d'un mode de réalisation :

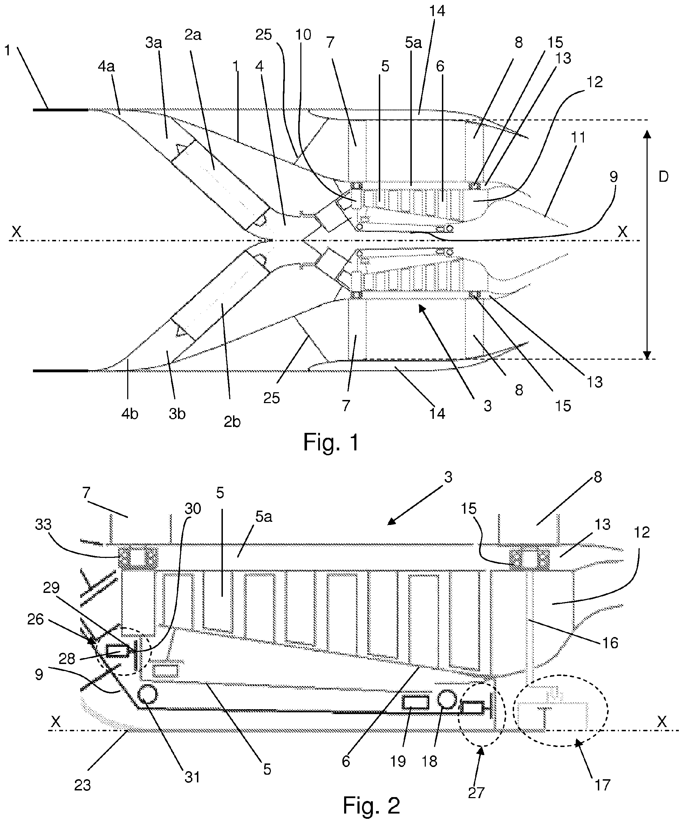

L'invention s'applique en particulier à un aéronef tel qu'un avion comportant une turbomachine du type de celle représentée sur la figure 1.

Comme représenté sur la figure 1, la turbomachine est centrée sur l'axe longitudinal XX du fuselage 1 de l'aéronef. Cette turbomachine comprend, d'amont en aval, dans le sens d'écoulement des gaz, deux générateurs de gaz distincts 2a, 2b alimentant simultanément une unique turbine de puissance 3. La turbomachine est installée à l'extrémité avale du fuselage 1 de l'aéronef.

De façon connue en soi, chaque générateur de gaz 2a, 2b comprend au moins un compresseur, une chambre de combustion et une turbine (non représentés sur les figures).

Dans ce document, les dénominations axiales et radiales se réfèrent à l'axe XX du fuselage et de la turbomachine. De même, les termes amont et aval se réfèrent à la direction de l'écoulement principal le long de cet axe.

Chaque générateur de gaz 2a, 2b est logé à l'intérieur d'une veine d'écoulement primaire 3a, 3b. Des entrées d'air distinctes 4a, 4b sont prévues pour ces veines 3a, 3b afin d'alimenter chaque générateur de gaz 2a, 2b. Sur l'exemple présenté, les entrées d'air 4a, 4b sont reliées au fuselage 1 de l'aéronef, en amont des générateurs de gaz 2a, 2b, et leur paroi interne est directement intégrée au fuselage 1. Elles absorbent ainsi une partie de la couche limite formée autour du fuselage 1 de l'aéronef. Dans une autre configuration, non représentée, les entrées d'air latérales alimentant chacun des générateurs de gaz peuvent être, au contraire, écartées du fuselage 1 de l'aéronef, de manière à minimiser ce phénomène d'absorption de la couche limite et à faciliter le fonctionnement des générateurs de gaz. Il est également envisageable d'utiliser plus de deux générateurs de gaz, par exemple trois pour alimenter la turbine de puissance 3.

De préférence, les deux veines d'écoulement primaires 3a, 3b des générateurs de gaz 2a, 2b convergent sur l'axe longitudinal XX et forment entre elles un V ouvert vers l'amont, dont l'angle d'ouverture est de préférence compris entre 80° et 120°.

Les deux veines d'écoulement primaires 3a, 3b des générateurs de gaz 2a, 2b convergent dans une veine primaire centrale 4 qui alimente la turbine de puissance 3. Un mélangeur (non représenté sur les figures) est de préférence positionné au niveau de la zone de convergence des deux veines 3a, 3b, logeant les générateurs de gaz 2a, 2b. Ce mélangeur a pour fonction de mélanger les flux gazeux issus des deux générateurs de gaz 2a, 2b pour créer un flux gazeux unique homogène en sortie de la veine centrale primaire 4.

La turbine de puissance 3, qui est alimentée par ce flux primaire en sortie de la veine centrale 4, est munie de deux rotors 5, 6 de turbine contrarotatifs pour entrainer de façon contrarotative deux soufflantes 7, 8. Ces rotors de turbine 5, 6 sont coaxiaux et centrés sur l'axe longitudinal XX. Ils tournent autour d'un carter central 9 fixé à la structure de l'aéronef.

Ici, un premier rotor 5 de turbine correspond à des aubes liées à un corps tubulaire 5a séparant la veine d'écoulement primaire, dans la turbine de puissance 3, de la veine d'écoulement secondaire, dans laquelle se trouvent les soufflantes 7,8. En d'autres termes, les aubes du premier rotor 5 s'étendent radialement vers l'intérieur. Les aubes et le corps tubulaire 5a du premier rotor 5 sont reliées aux paliers de support du rotor 5 sur le carter intérieur 9 par des bras support 10 qui traversent la veine primaire en amont de la turbine de puissance 3.

Sur le même exemple, le deuxième rotor 6 correspond à des aubes liées à une paroi radialement intérieure de la veine primaire dans la turbine 3 et intercalées longitudinalement entre les aubes du premier rotor 5. Les aubes du deuxième rotor 6 s'étendent radialement vers l'extérieur.

En aval de la turbine de puissance 3, la partie radialement interne du deuxième rotor 6 se prolonge par un corps central 11. D'autre part, elle est reliée, par des bras support 12, à un anneau 13 de support des aubes de la soufflante aval 8. De plus, cet anneau 13 prolonge le corps tubulaire 5a du premier rotor 5 et comporte une extension vers l'arrière, de façon à former, avec le corps central 11, une tuyère d'éjection primaire, en sortie de la turbine de puissance 3.

Sur l'exemple présenté, une première soufflante 7, amont, est positionnée au niveau de l'entrée de la turbine de puissance 3. Elle est reliée au premier rotor 5 au niveau des bras 10 qui soutiennent en amont le corps extérieur cylindrique 5a. Cette soufflante amont 7 tourne donc à la même vitesse que le premier rotor 5 de la turbine de puissance 3.

Sur le même exemple, la deuxième soufflante 8, aval, est positionnée au niveau de la sortie de la turbine de puissance 3. Elle est reliée au deuxième rotor 6 au niveau de l'anneau de support 13 et des bras 12 qui le soutiennent. Cette soufflante aval 8 tourne donc à la même vitesse que le deuxième rotor 6 de la turbine de puissance 3.

Les deux soufflantes 7, 8 sont carénées par une nacelle 14 fixée à la structure de l'aéronef. Cette nacelle 14 est notamment fixée, ici, à l'empennage vertical de l'aéronef, non représenté sur les figures. Les soufflantes présentent un diamètre externe D qui correspond sensiblement au diamètre externe le plus élevé du fuselage 1 de l'aéronef.

L'air entrant dans les soufflantes 7, 8 étant en partie composé de la couche limite du fuselage de l'aéronef, la vitesse en entrée est peu élevée par rapport à des soufflantes classiques de turbomachine et la vitesse en sortie est également plus basse à taux de compression identique, ce qui améliore les performances propulsives et acoustiques de ces soufflantes. Par ailleurs, l'important diamètre externe D des soufflantes 7, 8 entraîne que leur vitesse de rotation, comme celle des rotors 5, 6 de la turbine de puissance 3, restera également peu élevée par rapport à une turbomachine classique.

Par ailleurs, sur l'exemple présenté, la turbomachine comprend en outre un stator 25, formé d'une couronne d'aubes reliant la nacelle 14 au fuselage 1 en amont de la soufflante amont 5. Avantageusement, ce stator 25 peut servir à améliorer le rendement de la soufflante amont 7, par exemple en servant de redresseur.

Selon un premier aspect de l'invention, en référence à la figure 2, des premiers moyens de freinage 26 sont associés au premier rotor 5 de la turbine de puissance 3 et des seconds moyens de freinage 27 sont associés au deuxième rotor 6 de la turbine de puissance 3.

Ces moyens de freinage peuvent être activés de manière indépendante, de manière à choisir le rotor qui doit être arrêté.

Ces moyens de freinage 26, 27 prennent ici la forme de disques solidaires du carter central 9 et appuyant sur une partie correspondante des rotors 5, 6 de turbine.

En référence à la figure 2, la partie solidaire du carter central 9 des premiers moyens de freinage 26 peut être logée dans un espace libre entre le carter central 9 et la partie avant du premier rotor 5. De manière connue, un piston 28 pousse un disque 29 contre une partie 30 du voile du premier rotor 5 situé, sur l'axe longitudinal XX, à l'aplomb de la soufflante amont 7. On peut également noter qu'un palier de guidage 31 du premier rotor 5 sur le carter central 9 est situé à proximité.

De cette manière, le premier rotor 5 est bloqué par les moyens de freinage au niveau où les efforts sont exercés sur le rotor 5 par la soufflante amont 7. On évite ainsi que des couples s'exercent entre le moyen de freinage 26 et la soufflante amont 7 sur la longueur du premier rotor 5 lorsqu'on l'arrête.

Par ailleurs, le moyen de freinage 27 du deuxième rotor 6 est situé à l'arrière de la turbine de puissance 3, à proximité de la soufflante aval 8 entraînée par ce deuxième rotor 6.

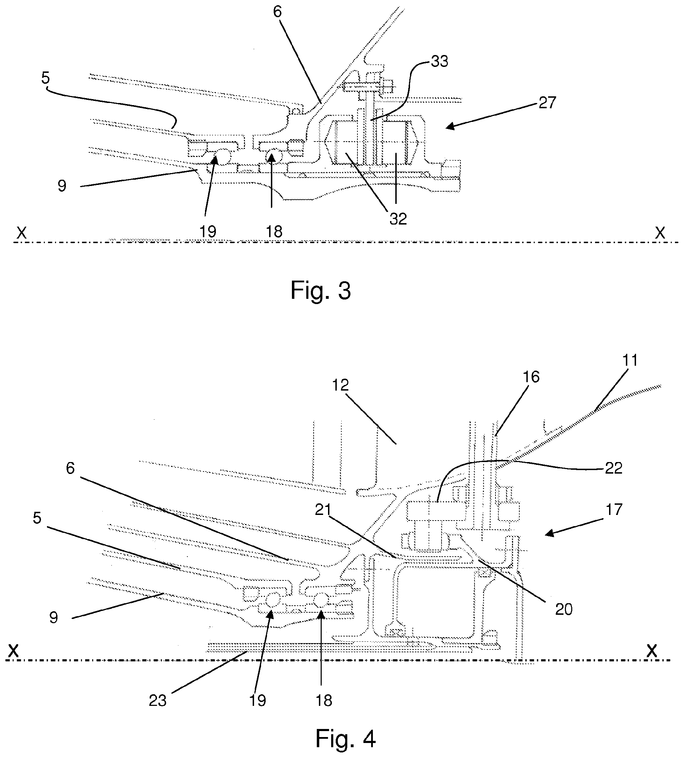

La figure 3 illustre un mode de réalisation permettant de loger ces moyens de freinage 27 de manière compacte dans cette région de la turbomachine. On peut voir sur la figure 3, l'arrière du carter central 9 supportant un premier palier 18 pour le second rotor 6, juste derrière un deuxième palier 19 pour le premier rotor 5. Le carter central 9 se prolonge vers l'arrière du palier 18 du second rotor 5 par une partie cylindrique qui porte sur sa périphérie une pluralité de mâchoires 32 réparties circonférentiellement. Ces mâchoires 32 entourent un disque 33 solidaire du deuxième rotor 6. L'ensemble est placé sous la partie du rotor 6 délimitant la veine d'écoulement primaire en sortie de la turbine de puissance. En se rapprochant, les mâchoires 32 peuvent ainsi presser sur le disque 33 et arrêter le rotor 6 sans exercer d'effort longitudinal sur celui-ci.

Par ailleurs, le carter central 9 est maintenu creux autour de l'axe longitudinal XX, ce qui permet de laisser passer des moyens d'actuation pour les mâchoires 32 du moyen de freinage 27, ainsi que pour d'autres moyens éventuellement placés plus en aval.

Selon un autre aspect de l'invention, sur l'exemple présenté, les aubes de la soufflante aval 8 sont montées avec un dispositif permettant de faire varier leur calage angulaire par rapport à un plan méridien vis-à-vis de l'axe longitudinal XX. Pour cela en référence à la figure 2, elles sont montées, ici, avec un système de bagues à roulement 15 sur l'anneau 13 de support et tournent chacune autour d'une tige radiale 16 qui traverse un bras 12 de support de l'anneau 13.

En référence à la figure 4, les tiges radiales 16 des aubes sont actionnées en rotation par un dispositif 17 à biellettes près de l'axe longitudinal XX. Le dispositif 17 comporte une partie cylindrique 20 mobile en translation selon l'axe longitudinal XX dans un logement 21 du deuxième rotor 6. Pour chaque aube de la soufflante aval 8, la partie mobile 20 est reliée à une biellette 22 elle-même solidaire de la tige radiale 16 de l'aube. Par son mouvement de translation, la partie mobile 20 entraîne chaque biellette 22 fixée à la tige radiale 16 d'une aube et fait tourner cette tige 16 autour de son axe.

L'ensemble du dispositif 17 est logé, de manière compacte, dans le corps central 11, juste en aval du palier 18 de roulement du second rotor 6 de la turbine de puissance 3 et sous la couronne des bras 12 de support. Sur la représentation faite dans la figure 4, le dispositif de freinage 26 n'a pas été représenté pour éviter de surcharger le dessin. En référence à la figure 2, le dispositif de freinage 27 est installé ici entre le palier 18 du deuxième rotor 6 et le dispositif 17 de commande du calage des aubes de la soufflante aval 8.

Par ailleurs, le mouvement de translation de la partie mobile 20 peut être commandé par un système de tringles 23 passant à l'intérieur du carter central 9. Ces tringles 23 peuvent être actionnées par des actuateurs (non représentés sur les figures) placés à l'intérieur du fuselage 1 de l'aéronef, en amont de la turbine de puissance 3.

Enfin, le débattement longitudinal de la partie mobile 20 en translation du dispositif 17 est ici configuré pour pouvoir faire tourner les aubes de la soufflante aval 8 d'un angle suffisant autour de leur axe pour qu'elles fassent fonction de stator redressant l'écoulement provenant de la soufflante amont 7, lorsque le second rotor 6 de la turbine 3 et la soufflante aval 8 sont arrêtés, alors que la soufflante amont 7 est toujours entraînée par le premier rotor 5 de la turbine 3 pour maintenir une propulsion de l'aéronef.

L'encombrement au niveau de la soufflante amont 7 ne permet pas ici, d'installer un dispositif de calage des aubes de la soufflante amont 7 analogue à celui de la soufflante aval 8.

Selon un aspect supplémentaire de l'invention, les aubes de la soufflante amont 7 sont montées, ici, avec un système de bagues à roulement 33 sur un anneau de support formé par l'avant du corps cylindrique extérieur 5a du premier rotor 5, qui sépare les veines d'écoulement primaire et d'écoulement secondaire au niveau de la turbine de puissance 3. Chaque aube peut ainsi tourner dans ces bagues 33 autour d'une tige radiale, non représentée sur la figure.

Cependant, le mouvement des aubes de la soufflante amont 7 en rotation autour de leurs tiges axiales est limité en butée entre une première position et une deuxième position. La première position correspond à un calage adapté au fonctionnement normal de la soufflante amont 7 tournant aux différents régimes de fonctionnement de la turbomachine. La deuxième position correspond à un calage adapté à un fonctionnement de la soufflante amont 7 en tant que redresseur pour la soufflante aval 8, lorsque c'est la soufflante amont 7 qui est arrêtée et que la soufflante aval 8 est entraînée pour maintenir la propulsion de l'aéronef.

De plus, les bagues à roulement 33 des aubes de la soufflante amont 7 sont équipées d'un dispositif élastique exerçant une force de rappel de la première position vers la deuxième position. Ce dispositif élastique est calibré pour que, lorsque la soufflante amont 7 tourne, le couple du aux efforts centrifuges cale chaque aube dans la première position. Ce dispositif élastique peut être formé, par exemple, par un ensemble de ressorts sur chaque bague 33 ou par un anneau en élastomère.

D'autre part, la structure fixe de la turbomachine, par exemple la partie qui se trouve en amont du carter central 9 de la turbine de puissance 3, comprend avantageusement deux accéléromètres décalés de 90° en azimut autour de l'axe longitudinal XX. Ces deux accéléromètres permettent ainsi de mesurer en particulier les vibrations dues à un balourd des soufflantes 7, 8, voire à la perte d'une des aubes.

De cette manière, le fonctionnement de l'ensemble lors d'une séquence accidentelle peut être schématiquement décrit comme suit, pour un aéronef selon l'invention et équipé d'un calculateur embarqué.

Lorsque la turbomachine fonctionne et que l'une des soufflantes subit une détérioration entraînant un balourd important, les accéléromètres détectent l'existence de la panne et permettent d'effectuer, par un traitement informatique approprié dans le calculateur embarqué, le diagnostic en déterminant quelle soufflante doit être arrêtée.

Si la soufflante aval 8 doit être arrêtée, le calculateur embarqué peut commander au système de freinage 27 correspondant d'arrêter cette soufflante. Parallèlement, il commande au dispositif 17 de calage des aubes de mettre la soufflante aval 8 en mode redresseur et adapte les paramètres moteur pour permettre à la soufflante amont 7 d'être entraînée correctement dans cette configuration.

Si la soufflante amont 7 doit être arrêtée, le calculateur embarqué peut commander au système de freinage 26 correspondant d'arrêter cette soufflante et adapte les paramètres moteur pour permettre à la soufflante aval 8 d'être entraînée correctement dans cette configuration. Dans ce cas, lorsque la soufflante amont 8 s'arrête, les dispositifs élastiques sur les bagues de roulement 33 des aubes de cette soufflante emmènent automatique le calage de ces aubes en butée sur la deuxième position, correspondant à un mode de fonctionnement redresseur pour la soufflante amont 7.

## Revendications

1. Aéronef comportant un fuselage (1) et propulsé par une turbomachine à deux soufflantes (7,8) coaxiales et contrarotatives, la turbomachine comportant une turbine de puissance (3) ayant deux rotors contrarotatifs entraînant, l'un (5) une soufflante (7) en amont de la turbine (3), l'autre (6) une soufflante (8) en aval de la turbine (3), chaque soufflante comportant une couronne d'aubes, et l'ensemble des soufflantes (7,8) et de la turbine de puissance (3) étant intégré à l'arrière du fuselage (1), dans le prolongement de celui-ci, aéronef **caractérisé en ce qu'**il comporte, pour au moins l'une des soufflantes (7,8), un dispositif (28, 27) de blocage de la rotation de la soufflante (7, 8), des moyens (33, 17) configurés pour modifier le calage des aubes de cette soufflante (7, 8) de manière à la faire fonctionner en tant que redresseur par rapport à l'autre soufflante et un dispositif de blocage (27, 26) comportant des moyens de freinage, par exemple des freins à disque, permettant de solidariser le rotor (6, 5) de la turbine de puissance (3) entraînant la soufflante (8, 7) correspondante avec un carter fixe (9) de la turbomachine.

2. Aéronef selon la revendication précédente, dans lequel des moyens de freinage pour la soufflante aval (8) sont installés dans un corps central (11), situé en aval de la turbine de puissance (3) et entouré par l'écoulement primaire traversant la turbine.

3. Aéronef selon la revendication précédente, dans lequel lesdits moyens (33, 17) de modification de calage des aubes comportent un mécanisme (17) entraînant la rotation d'une tige (16) de calage de chaque aube de la soufflante aval (8) configuré, en outre, pour adapter l'opérabilité de cette soufflante.

4. Aéronef selon l'une quelconque des revendications précédentes , dans lequel des moyens de freinage pour la soufflante amont (7) sont installés en amont de la turbine de puissance (3).

5. Aéronef selon la revendication précédente, dans lequel le support (5a) des aubes de la soufflante amont (7) comporte un dispositif (33) configuré pour permettre la rotation des aubes de la soufflante amont (7) autour d'un axe radial par rapport à la rotation de la soufflante (7), et exercer un rappel élastique de l'orientation de ces aubes d'un calage correspondant à un fonctionnement de soufflante à un calage correspondant à un fonctionnement de redresseur.

6. Aéronef selon l'une des revendications précédentes, comportant en outre des moyens de détection du balourd sur l'un des rotors (5, 6) de soufflante (7, 8) par au moins un accéléromètre orienté radialement par rapport à la rotation des soufflantes (7, 8).

7. Aéronef selon la revendication précédente, comportant au moins deux accéléromètres décalés angulairement par rapport à la rotation des soufflantes.

8. Aéronef selon l'une des revendications précédentes, dans lequel au moins deux générateurs de gaz (2a, 2b) alimentent la turbine de puissance (3), lesdits générateurs étant alimentés eux-mêmes par des entrées d'air (4a, 4b) distinctes disposées en périphérie du fuselage (1) de l'aéronef.

## Patentansprüche

1. Flugzeug, das einen Rumpf (1) umfasst und von einer Turbomaschine mit zwei koaxialen und gegenläufigen Lüftern (7, 8) angetrieben wird, wobei die Turbomaschine eine Leistungsturbine (3) enthält, die zwei gegendrehende Rotoren aufweist, von denen einer (5) einen Lüfter (7) stromaufwärts der Turbine (3), der andere (6) einen Lüfter (8) stromabwärts der Turbine (3) treibt, wobei jeder Lüfter einen Schaufelkranz enthält und die Gesamtheit der Lüfter (7, 8) und der Leistungsturbine (3) im hinteren Rumpf (1) in dessen Verlängerung integriert sind, Flugzeug, **dadurch gekennzeichnet, dass** es für mindestens einen der Lüfter (7, 8) eine Vorrichtung (28, 27) zum Sperren der Rotation des Lüfters (7, 8) enthält, Mittel (33, 17), die konfiguriert sind, um die Feststellposition der Schaufeln dieses Lüfters (7, 8) so zu ändern, dass er als Gleichrichter in Bezug auf den anderen Lüfter funktioniert, und eine Vorrichtung zum Sperren (27, 26), die Bremsmittel, zum Beispiel Scheibenbremsen, enthält, zur Befestigung des Rotors (6, 5) der Leistungsturbine (3), der den entsprechenden Lüfter (8, 7) treibt, mit einem festen Gehäuse (9) der Turbomaschine.

2. Flugzeug nach dem vorstehenden Anspruch, wobei Bremsmittel für den stromabwärtigen Lüfter (8) in einem zentralen Körper (11) eingebaut sind, der stromabwärts der Leistungsturbine (3) liegt und von der durch die Turbine fließenden Primärströmung umgeben ist.

3. Flugzeug nach dem vorstehenden Anspruch, wobei die Mittel (33, 17) zur Änderung der Feststellposition der Schaufeln einen Mechanismus (17) enthalten, der die Rotation einer Feststellpositionsstange (16) jeder Schaufel des stromabwärtigen Lüfters (8) verursacht, der weiter konfiguriert ist, um die Funktionsfähigkeit dieses Lüfters anzupassen.

4. Flugzeug nach einem der vorstehenden Ansprüche, wobei Bremsmittel für den stromaufwärtigen Lüfter (7) stromaufwärts der Leistungsturbine (3) eingebaut sind.

5. Flugzeug nach dem vorstehenden Anspruch, wobei der Träger (5a) der Schaufeln des stromaufwärtigen Lüfters (7) eine Vorrichtung (33) enthält, die konfiguriert ist, um die Rotation der Schaufeln des stromaufwärtigen Lüfters (7) um eine Radialachse in Bezug auf die Rotation des Lüfters (7) zu ermöglichen, und eine elastische Rückstellung der Ausrichtung dieser Schaufeln von einer dem Lüfterbetrieb entsprechenden Feststellposition zu einer dem Gleichrichterbetrieb entsprechenden Feststellposition durchzuführen.

6. Flugzeug nach einem der vorstehenden Ansprüche, das weiter Mittel zum Erfassen der Unwucht an einem der Rotoren (5, 6) des Lüfters (7, 8) durch mindestens einen radial in Bezug auf die Rotation der Lüfter (7, 8) ausgerichteten Beschleunigungssensor enthält.

7. Flugzeug nach dem vorstehenden Anspruch, das mindestens zwei Beschleunigungssensoren enthält, die winkelversetzt in Bezug auf die Rotation der Lüfter sind.

8. Flugzeug nach einem der vorstehenden Ansprüche, wobei mindestens zwei Gasgeneratoren (2a, 2b) die Leistungsturbine (3) versorgen, wobei die Generatoren selbst von getrennten Lufteinlässen (4a, 4b) versorgt werden, die am Umfang des Flugzeugrumpfs (1) angeordnet sind.

## Claims

1. Aircraft comprising a fuselage (1) and propelled by a turbine engine having two coaxial and contra-rotating fans (7, 8), the turbine engine having a power turbine (3) having two contra-rotating rotors, one (5) driving a fan (7) upstream of the turbine (3), the other (6) driving a fan (8) downstream of the turbine (3), each fan having a ring of blades, and the assembly of the fans (7, 8) and power turbine (3) being integrated at the rear of the fuselage (1), in the extension thereof, the aircraft being **characterised in that** it comprises, for at least one of the fans (7, 8), a locking device (28, 27) for locking the rotation of the fan (7, 8), means (33, 17) designed to modify the pitch of the blades of said fan (7, 8) so as to operate said fan as a guide vane assembly in relation to the other fan, and a locking device (27, 26) having braking means, for example disc brakes, which make it possible to rigidly connect the rotor (6, 5) of the power turbine (3) driving the corresponding fan (8, 7) to an immovable casing (9) of the turbine engine.

2. Aircraft according to the preceding claim, wherein braking means for the downstream fan (8) are mounted in a centerbody (11) that is located downstream of the power turbine (3) and surrounded by the primary flow passing through the turbine.

3. Aircraft according to the preceding claim, wherein said means (33, 17) for modifying the pitch of the blades comprise a mechanism (17) that rotates a pitch rod (16) for adjusting the pitch of each blade of the downstream fan (8) and is designed to also adjust the operability of said fan.

4. Aircraft according to any of the preceding claims, wherein braking means for the upstream fan (7) are mounted upstream of the power turbine (3).

5. Aircraft according to the preceding claim, wherein the support (5a) of the blades of the upstream fan (7) comprises a device (33) which is designed to allow the blades of the upstream fan (7) to rotate about an axis that is radial relative to the rotation of the fan (7), and to apply an elastic return of the orientation of said blades from a pitch corresponding to fan operation to a pitch corresponding to guide vane assembly operation.

6. Aircraft according to any of the preceding claims, further comprising means for detecting the imbalance on one of the fan (7, 8) rotors (5, 6) by means of at least one accelerometer which is oriented radially relative to the rotation of the fans (7, 8).

7. Aircraft according to the preceding claim, comprising at least two accelerometers which are angularly offset relative to the rotation of the fans.

8. Aircraft according to any of the preceding claims, wherein at least two gas generators (2a, 2b) feed the power turbine (3), said generators being fed in turn by distinct air intakes (4a, 4b) arranged at the periphery of the fuselage (1) of the aircraft.
